# EUROPEAN PATENT SPECIFICATION

(11) **EP 3 133 915 B1**
(45) Date of publication and mention of the grant of the patent: **19.02.2020**
(21) Application number: 15728658.4
(22) Date of filing: 16.04.2015
(51) Int. Cl.: A01K 47/06

(54) **BEE POLLEN TRAP SUITABLE FOR COLLECTING OF POLLEN IN A COMB HIVE**
ZUM SAMMELN VON POLLEN IN EINEM BIENENSTOCK GEEIGNETE BIENENPOLLENFALLE
PIÈGE POUR POLLEN D'ABEILLE, APPROPRIÉ POUR COLLECTER DU POLLEN DANS UNE RUCHE À ALVÉOLES

(30) Priority: 24.04.2014 SI 201400158 P; 14.04.2015 SI 201500092 P
(43) Date of publication of application: 01.03.2017
(73) Proprietor: KOVINOPLASTIKA KOGELNIK d.o.o., 2392 Mezica (SI)
(72) Inventor: KOGELNIK, Roman, 2392 Mezica (SI)
(74) Representative: Golmajer Zima, Marjanca
(86) International application number: PCT/SI2015/000016
(87) International publication number: WO 2015/163827

(56) References cited:
- DE-U1- 20 311 640
- FR-A1- 2 911 248
- US-A- 3 995 338
- US-A- 4 517 694
- US-A- 5 348 511

## Description

The invention belongs to human necessities, namely to care of bees, in particular to details of beehives i.e. comb hives.

The purpose of the invention is to create a pollen trap, which would be suitable for collecting of pollen in hives and by which the efficiency of collecting the pollen could be essentially improved by simultaneously essential improvement of quality of such collected pollen.

A pollen trap is disclosed in DE 203 11 640 U1. Such appliance is suitable for mounting onto each existing i.e. disposable hive, namely in just in front of the inlet passage of the hive. Such pollen trap is intended for collecting of pollen, which is removed from bees prior to entering the hive. To this aim, the pollen trap is furnished with a frame i.e. a housing, which shall be water resistant and therefore made of plastics or polyurethane rather than of wood, wherein a plurality of passages is available, through which the bees may pass in both directions, namely towards the hive and also in opposite direction. The housing is furnished with an adaptor, which serves for adjusting the pollen trap to different hives, which are used in various regions worldwide. It is also proposed that said passages shall be formed of silver wire bent into a shape of a Greek letter omega, wherein the aperture of the passages shall be 3 to 10 mm, by which the bees should be prevented against damages. The pollen trap furthermore comprises a ventilating aperture, which can be closed by a slider, as well as container for collecting the pollen when removed from the bees by passing through said passages. A covering plate is placed above said passages, which prevents introduction of impurities and wax into said pollen collecting container. Moreover, the pollen trap is furnished with a lever, by which it is either open/activated or closed/deactivated upon mounting onto the hive.

Despite to previously described measures, the efficiency of such appliance in view of gaining as much as possible of pollen in a relatively short time of availability thereof in the nature is relatively low. Namely, the bees must pass through said passages in both directions, which can never be fluent and without interruptions. Besides, the bees have difficulties by finding the inlet opening, and their accomodation to the presence of the pollen trap on the hive takes relatively long time, usually several days, wherein during said accomodation the quantity of such collected pollen is pure. Similar problems may also occur in certain weather conditions, for example in wind, since the bees have difficulties to withstand the wind by waiting for the possibility of entering the hive throughout the pollen trap. Still further, quality of such collected pollen in particular in rainy period is really pure, since the rain drops can reach the pollen collecting container, and each introduction of water essentially decreases quality thereof.

A pollen trap is furthermore disclosed in US 3,995,338 and is suitable for mounting on a beehive. When bees are passing through passages in said pollen trap toward said beehive, pollen is removed and deposited in a container placed below said passages.

Besides, a beehive-mounted device is disclosed in US 5,348,511, which is generally intended for dissemination of biocontrol agents by means of honeybees. Said device is also suitable for mounting on beehive, however the bees are allowed to move through said device independently inward and outward along two different paths.

The present invention refers to a bee pollen trap, as disclosed in claim 1, which is suitable for collecting of pollen in a comb hive and comprises a housing, which is via an adaptor furnished with a suitable opening connectable to each disposable comb hive, so that through said opening in said adaptor and therefore also through said pollen trap the bees are enabled to enter and to leave said comb hive, wherein a plurality of passages is arranged within said housing at appropriate distance apart from an inlet passage, which are arranged for passing the bees there-through, by which the pollen is removed from the bees and collected within a container, which is located below said passages. Said housing is furnished with a covering plate, which is located above said passages and said container, and is serving for protection of such collected pollen against intrusion of moisture and impurities.

The invention provides that said pollen trap comprises two mutually separated passages, through which the bees are enabled to move towards the hive or in opposite direction, namely an inlet passage, which extends from the inlet opening of the pollen trap through said passages for removal of pollen from the bees in the area above the pollen collecting container and continues towards the hive, as well as an outlet passage, which extends from the hive towards the outlet recess and by-passes said passages.

The invention further provides that said housing comprises at least one area, in particular an optionally removable cover consisting of water resistant material, which is arranged above said covering plate, so that said covering plate is then located within the housing below said cover and at a sufficient distance apart from said cover, so that between the cover and said covering plate a gap is formed for the purpose of passing the bees and drones there-through, which actually defines said outlet passage with said outlet recess.

Consequently, said inlet passage and said outlet passage are separated from each other on the one hand by means of essentially vertical perforated wall, which is furnished with said passages for removing pollen from the bees and arranged above said pollen collecting container, and on the other hand by means of said covering plate, which extends substantially in a horizontal direction within said housing above said inlet passage closely to said perforated wall and at a sufficient distance apart from the cover of said housing.

Said perforated wall is optionally by means of a suitable actuator, which is located outside of the housing, pivotable around an axis, which extends transversally in a horizontal plane, and can also be fixed in each desired position at each desired inclination relative to said horizontal plane.

In accordance with the invention, said perforated wall is uniformly conceived and consists of a plurality of horizontal bearing members, which are equidistantly spaced apart from each other and each of them is furnished with a plurality of cantilevered protrusions, which are in a direction along each corresponding bearing member, equidistantly spaced apart from each other and are all directed in the same direction, wherein each of said cantilevered protrusions is arranged perpendicularly with respect to each belonging bearing member and extends towards each neighboring bearing member, but ends at appropriate distance apart from said neighboring bearing member and is slightly rounded on its terminal portion, so that the bees are enabled to pass through such established passages between each two neighboring protrusions on each particular bearing member as well as between each particular bearing member and each neighboring bearing member upon entering the pollen trap and prior to entering the hive.

A grid is placed below said perforated wall with said passages and above said pollen collecting container, which is adjusted to allow the pollen to pass there-through and extends above at least the majority of the silhouette of said container in the top view.

In accordance with a further aspect of the invention, the pollen collecting container is embedded within the housing by means of guides and is consequently displaccable in the longitudinal direction of the pollen trap housing. In this, the bottom portion of said pollen collecting container is either compact and impermeable for air and moisture, or is formed as a grid with a sufficient density to enable ventilation and to prevent pollen from passing there-through.

On the other hand, a flight board is mounted within the housing just below and just in front of the inlet passage, and is adjusted for enabling the bees to land prior to entering the pollen trap and rotatable around the transversal horizontal geometric axis with the possibility of fixation in each appropriately inclined position relative to the horizontal plane by means of a suitable actuator, which is located outside of the housing. It is in particular preferred, if said flight board is furnished with at least one throughout passage, which is located adjacent to said axis and the inlet passage and allows to the bees to pass there-trough from the bottom side of the flight board to the top side thereof.

In accordance with the invention, the outlet passage is on the side facing towards the opening of the adaptor completed with a further, at least partially widened passage.

According to the invention, an additional wall is placed within said additional widened passage adjacent to the pollen collecting container, and is pivotable around the transversal horizontal geometric axis with the possibility of fixation in each desired inclination relative to the horizontal plane by means of a suitable actuator, which is located outside of the housing.

The invention will be described on the basis of embodiments, which are shown in the attached drawings, wherein
- Fig. 1: is a perspective view of a pollen trap in position, in which it is placed to each existing i.e. each disposable bee hive;
- Fig. 2: is a cross-section along the plane A - A according to Fig. 1;

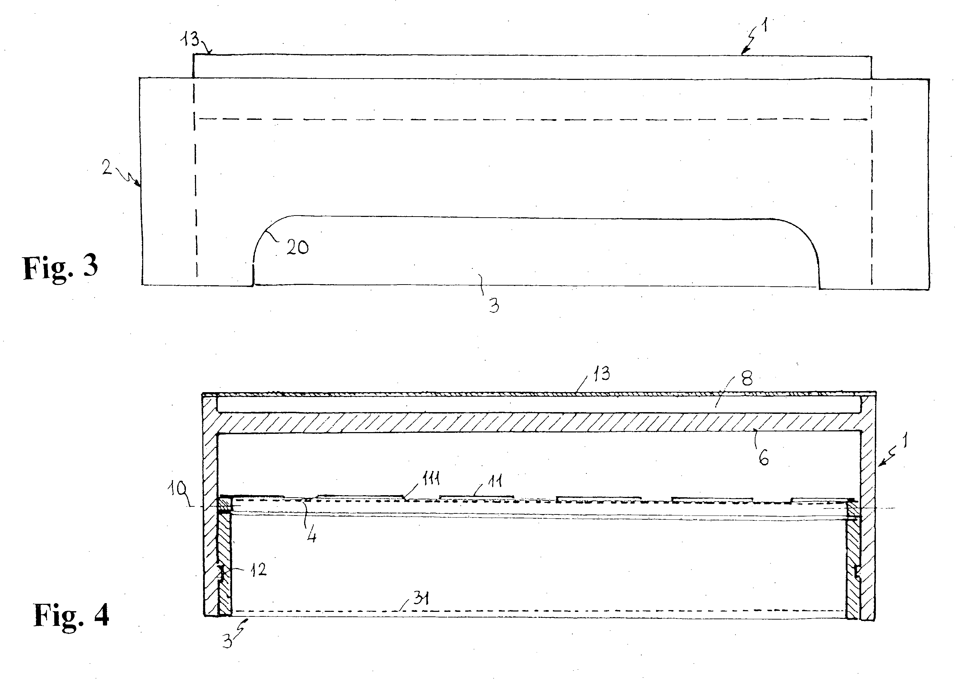

- Fig. 3: is a rear view along the arrow B according to Fig. 1;
- Fig. 4: is a cross-section along the plane C - C according to Fig. 2;
- Fig. 5: presents a further embodiment of the pollen trap shown in a cross-section along the said plane A - A according to Fig. 1 ; and
- Fig. 6: is a partial presentation of alternative embodiment of perforated wall, through which the bees are passing in the pollen trap according to the invention.

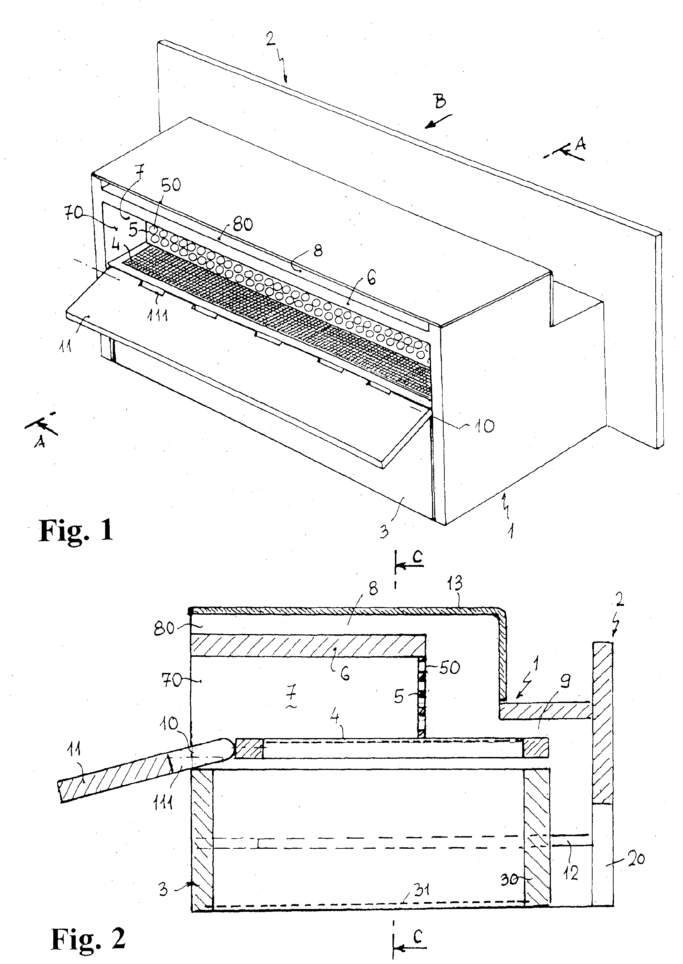

A bee pollen trap (Fig. 1) comprises an essentially box-shaped housing 1, which is by means of a suitable adaptor 2 optionally attached to each disposable comb hive, which is not shown in the drawing: The adaptor 2 is furnished with an opening 20, the position and shape of which are adjusted to each disposable comb hive, to which the adaptor is attached. The bee pollen trap is namely just an optional accessory, which can be optionally attached to the comb hive in particular during a time period, in which the pollen produced by certain plant varieties is available, wherein surmounting of the pollen trap neither requires any amendments of the comb hive nor has any impact to activities performed therein.

Said housing 1 is adjusted to receive a container 3 for collecting said pollen, which is located in the bottom area of said housing 1. In the shown embodiment, said container 3 is by means of guides 12 on the housing 1 displaceable in the longitudinal direction of said housing 3 i.e. towards the comb hive or in the opposite direction. The container 3 consists of a frame 30 and a bottom portion 31. which is optionally due to enabling air circulation formed as a grid, the density of which is sufficient to prevent the pollen from passing there-through (Fig. 2), or in accordance with the preferred embodiment of the invention the bottom portion 31 said bottom portion 31' is compact, which prevents the stored pollen to come in contact with the moisture air i.e. the moisture, which prevents the pollen from infection with fungi.

A grid 4 is arranged above said pollen collecting container 3, and its pattern is adjusted to dimensions of pollen, so that the pollen can pass through said grid 4, but not also the impurities like wax, larvae or the like. With regard to position of mounting the pollen trap, said grid 4 is arranged at least approximately in the horizontal plane and extends essentially above the complete pollen collecting container 3.

A vertical perforated wall 5 is arranged above said grid 4 with regard to position of mounting the pollen trap, which is furnished with a plurality of passages 50, which are for example formed as circular throughout bores having a diameter, which enable bees to pass through said wall 5 towards the hive (regarding Fig. 2 from the left towards the right), wherein said passages 50 arc also sufficiently narrow that the pollen is removed from the bees during passing there-through, wherein said pollen is then collected within the container 3, which is located below the grid 4.

A covering plate 6 is arranged above said grid 4 at a sufficient distance there-from, and extends above the perforated wall 5, so that an inlet passage 7 is formed between said grid 4 and said covering plate 6, through which the bees can pass when entering the pollen trap through the inlet opening 70 and moving towards said perforated wall 5.

Said covering plate 6 is arranged within the housing 1 and at a suitable distance there-from. so that an outlet passage 8 with an outlet recess 80 is formed between the housing and the covering plate 6 in the area above said inlet passage 7 and inlet opening 70.

In the shown embodiment the housing is furnished with an optionally removable cover 13, which is located above said covering plate 6 and is preferably made of a water resistant material. The height of said outlet passage is sufficient to allow the bees and drones to leave the hive and pass throughout the pollen trap and moreover also removal dead bees from the hive. Said covering plate 6 serves for preventing the wax particles and other impurities resulting from the hive to fall into the pollen collecting container 3.

Also the previously mentioned perforated wall 5, the grid 4 and said pollen collecting container 3 are arranged at suitable distance apart from the housing 1, so that on that side of the pollen trap, which is facing towards the hive, between them and the housing 1 there is a passage 9, by which in the area between the hive and the pollen trap the opening 20 of the adaptor 2 is connected with the outlet recess 80. The invention moreover preferably provides that said perforated wall 5 is by means of appropriate actuator 501, which is located outside of the housing 1, rotatable around the axis 500, which extends transversally in the horizontal plane of the housing 1.

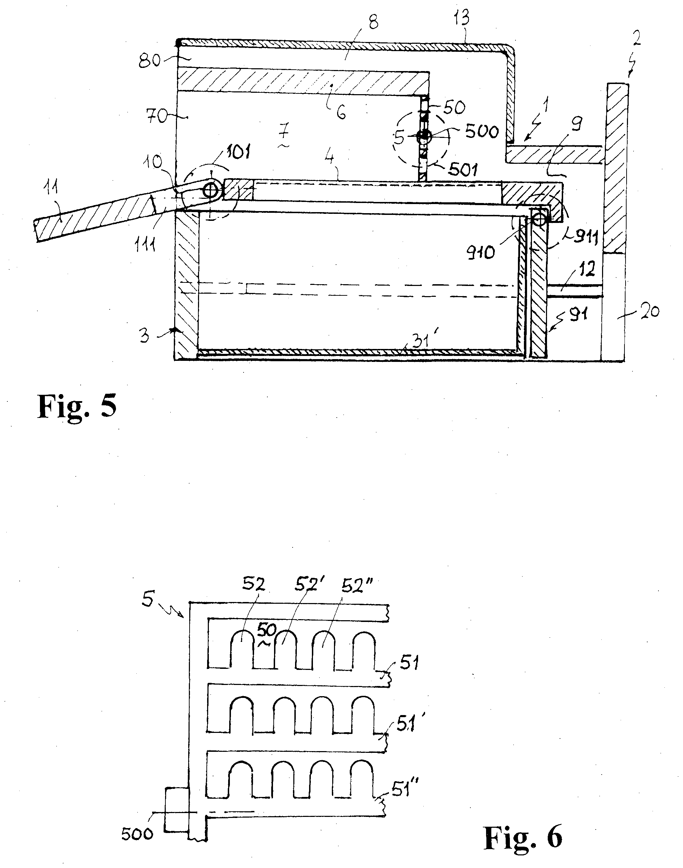

As mentioned, said perforated wall 5 as shown in Fig. 1 is furnished with passages 50 in the form of round throughout bores. In the practice, a risk of damages on bee wings by passing through such passages 50 may persist, so that the invention provides a further embodiment of said perforated wall 5, which is presented in Fig. 6.

In accordance with said embodiment as shown in Fig. 6, said perforated wall 5 is also uniform, but is however formed of a sequence of horizontal bearing members 51, 51', 51", which are equidistantly spaced apart from each other, and each of them is furnished with a plurality of cantilevered protrusions 52, 52', 52", which are equidistantly spaced apart from each other along each belonging bearing member 51, 51', 51" and extend in the same direction with respect to each other. Each of said cantilevered protrusions 52, 52', 52" on each corresponding horizontal bearing members 51, 51', 51" extends perpendicularly with regard to each corresponding horizontal bearing member 51, 51', 51" and extends towards each neighboring bearing member 51, 51', 51", but has a slightly rounded terminal portion, which is sufficiently spaced apart from each neighboring bearing member 51. 51', 51", Consequently, the bees are enabled to pass between each two neighboring protrusions 52, 52', 52" on each corresponding bearing member 51, 51', 51" and between each two neighboring bearing members 51, 51', 51" upon entering the pollen trap and prior to entering the hive, by which any damage of bee wings is absolutely excluded.

Moreover, a flight board 11 is mounted within the housing 1 adjacent to the inlet passage 7, and is adapted to be pivoted around the horizontal axis 10 and fixed in each appropriate position relative to the horizontal plane. Said flight board 11 is furnished with several throughout passages 111, which are located in the area of said inlet passage 7 and through which the bees are able to pass when trying to enter the inlet passage 7 from the area below said flight board 11, and to continue moving along the pollen trap through the perforated wall 5 and then towards the hive. Said flight board 11 can be pivoted relative to the horizontal plane, by which appropriate angle can be adjusted, which enable landing of bees in each particular weather conditions, and also unhindered draining of water.

Thanks to such described concept of the pollen trap, the bees very quickly become familiar with a path of returning back to the hive, starting from the flight board 11 and through a pretty comfortable inlet passage 7 towards the perforated wall 5 and through the passages 50 therein, which is then followed by passing the passage 9 and optionally, either by continuing through the opening 20 in the adaptor 2 towards the hive, or by returning through the outlet passage 8 back to the outside. By passing the passages 50, the majority of pollen is removed from each bee, which by falling down passes the grid 4 and remains deposited in the pollen collecting container 3.

In this, it is quite important that each bee, when moving throughout a particular passage 50, is not hindered by other bees, which left the hive and move in opposite direction. When leaving the hive, the bees exit through the opening 20 in the adaptor and unhindered continue moving along the pollen trap through at least partially widened passage 9 and then through the outlet passage 8 towards the outlet recess 80, where they can fly away. Drones, when leaving the hive, can move along the same direction.

Moreover, such concept of the pollen trap even in rainy weather prevents the pollen collected in the container to come in contact with moisture, since only the flight board 11 and the water resistant cover 13 on the housing 1 are exposed to the rain.

Such pollen trap enables air circulation throughout the passages 7, 8 and 9, as well as through the grid 4, and optionally through the grid 31, which leads both to improved aeration and air conditioning of the hive as such and also to permanent drying of moisture, which might be introduced into the pollen trap by the bees.

Whenever the pollen trap and the belonging hive are located in the area of relatively high temperature differences, then the embodiment according to Fig. 5 is preferred. In such case, the pollen collecting container 3 is furnished with a non-perforated bottom wall 31', and moreover, an additional wall 91 is arranged in the area of said widened passage 9 closely to the pollen collecting container 3. Said additional wall 91 is serving as barrier between the pollen collecting container 3 and the adaptor 2 and the hive, and is by means of a suitable actuator 911, which is located outside from the housing 1, pivotable around the transversal horizontal geometric axis 910 with the possibility of fixation thereof in each desired position relative to the horizontal plane. Said embodiment is in particular preferred, when due to relative high temperature difference between the interior of the hive and the atmosphere temperature i.e. temperature within the pollen trap, the moisture from the air could condensate within the pollen collecting container 3, which could lead to infection with fungi.

## Claims

1. Bee pollen trap suitable for collecting of pollen in a comb hive, comprising a housing (1), which is via an adaptor (2) furnished with a suitable opening (20) connectable to each disposable comb hive, so that through said opening (20) in said adaptor (2) and therefore also through said pollen trap the bees are enabled to enter and to leave said comb hive, wherein a plurality of passages (50) is arranged within said housing (1) at appropriate distance apart from an inlet passage (7), which are arranged for passing the bees there-through, by which the pollen is removed from the bees and collected within a container (3), which is located below said passages (50). and is embedded within the housing (1) by means of guides (12) and is consequently displaceable in the longitudinal direction of the pollen trap housing (1),
and wherein said housing (1) is furnished with a covering plate (6), which is located above said passages (50) and said container (3), and is serving for protection of such collected pollen against intrusion of moisture and impurities,
**characterised in that** said pollen trap comprises two mutually separated passages (7,8), through which the bees are enabled to move towards the hive or in opposite direction,
namely an inlet passage (7), which extends from the inlet opening (70) of the pollen trap through said passages (50) for removal of pollen from the bees in the area above the pollen collecting container (3) and continues towards the hive, as well as an outlet passage (8), which extends from the hive towards the outlet recess (80) and by-passes said passages (50),
and wherein said housing (1) comprises at least one area, in particular an optionally removable cover (13) consisting of water resistant material, which is arranged above said covering piate (6), so that said covering plate (6) is located within the housing (1) below said cover (13) and at a sufficient distance apart from said cover (13), so that between the cover (13) and said covering plate (6) a gap is formed for the purpose of passing the bees and drones there-through, which defines said outlet passage (8) with said outlet recess (80),
and wherein said inlet passage (7) and said outlet passage (8) are separated from each other on the one hand by means of Essentially vertical perforated wall (5), which is furnished with said passages (50) for removing pollen from the bees and arranged above said pollen collecting container (3), and on the other hand by means of said covering plate (6), which extends substantially in a horizontal direction within said housing (1) above said inlet passage (7) closely to said perforated wall (5) and at a sufficient distance apart from the cover (13) of said housing (1),
said perforated wall (5) is by means of a suitable actuator (501), which is located outside of the housing (1), pivotable around an axis (500), which extends transversally in a horizontal plane, and can also be fixed in each desired position at each desired inclination relative to said horizontal plane, wherein said perforated wall (5) is uniformly conceived and consists of a plurality of horizontal bearing members (51, 51', 51"), which are equidistantly spaced apart from each other and each of them is furnished with a plurality of cantilevered protrusions (52, 52', 52"). which are in a direction along each corresponding bearing member (51, 51', 51"), equidistantly spaced apart from each other and are all directed in the same direction, wherein each of said cantilevered protrusions (52, 52', 52") is arranged perpendicularly with respect to each belonging bearing member (51, 51', 51") and extends towards each neighboring bearing member (51, 51', 51"), but ends at appropriate distance apart from said neighboring bearing member (51, 51', 51") and is slightly rounded on its terminal portion, which enables the bees to pass through such established passages (50) between each two neighboring protrusions (52, 52', 52") on each particular bearing member (51, 51', 51") as well as between each particular bearing member (51, 51', 51") and each neighboring bearing member (51, 51', 51") upon entering the pollen trap and prior to entering the hive,
and **in that** a grid (4) is placed below said perforated wall (5) with said passages (50) and above said pollen collecting Container (3), which is adjusted to allow the pollen to pass there-through and extends above at least the majority of the silhouette of said container (3) in the top view,
and **in that** a flight board (11) is mounted within the housing (1) just below and just in front of the inlet passage (7), and is adjusted for enabling the bees to land prior to entering the pollen trap and rotatable around the transversal horizontal geometric axis (10) with the possibility of fixation in each appropriately inclined position relative to the horizontal plans by means of a suitable actuator (101), which is located outside of the housing (1), wherein said flight board (11) is furnished with at least one throughout passage (111), which is located adjacent to said axis (10) and the inlet passage (7) and allows to the bees to pass there-trough from the bottom side of the flight board (11) to the top side thereof,
and **in that** the outlet passage (8) us on the side facing towards the opening (20) of the adaptor (2) completed with a further, at least partially widened passage (9), wherein an additional wall (91) is placed within said additional widened passage (9) adjacent to the pollen collecting container (3), and is pivotable around the transversal horizontal geometric axis (910) with the possibility of fixation in each desired inclination relative to the horizontal plane by means of a suitable actuator (911), which is located outside of the housing (1).

2. Pollen trap according to Claim 1, **characterized in that** the bottom portion (31) of said pollen collecting container (3) is compact and impermeable for air and moisture.

3. Pollen trap according to Claim 1 or 2, **characterized in that** the bottom portion (31) of said pollen collecting container (3) is formed as a grid with a sufficient density to enable ventilation and to prevent pollen from passing there-through.

## Patentansprüche

1. Zum Sammeln von Pollen in einem Bienenstock geeignete Bienenpollenfalle, ein Gehäuse (1) umfassend, das über einen Adapter (2) mit einer geeigneten Öffnung (20) versehen ist, die mit jedem verfügbaren Bienenstock verbindbar ist, sodass die Bienen durch die Öffnung (20) in dem Adapter (2) und dadurch auch durch die Pollenfalle in den Bienenstock eintreten und diesen verlassen können, wobei mehrere Durchgänge (50) innerhalb des Gehäuses (1) in einem geeigneten Abstand von einem Einlassdurchgang (7) angeordnet sind, die dazu angeordnet sind, dass die sich die Bienen dort hindurch bewegen können, wodurch der Pollen von den Bienen entfernt und in einem Behälter (3) gesammelt wird, der sich unterhalb der Durchgänge (50) befindet und mittels Führungen (12) in das Gehäuse (1) integriert ist und demzufolge in Längsrichtung des Pollenfallengehäuses (1) verschiebbar ist,
und wobei das Gehäuse (1) mit einer Abdeckplatte (6) versehen ist, die sich über den Durchgängen (50) und dem Behälter (3) befindet und dem Schutz des gesammelten Pollens vor eintretender Feuchtigkeit und Verunreinigungen dient,
**dadurch gekennzeichnet, dass** die Pollenfalle zwei voneinander getrennte Durchgänge (7, 8) umfasst, durch die sich die Bienen zum Bienenstock in oder in die entgegengesetzte Richtung bewegen können, nämlich einen Einlassdurchgang (7), der sich von der Einlassöffnung (70) der Pollenfalle durch die Durchgänge (50) erstreckt, um den Pollen von den Bienen in dem Bereich über dem Pollensammelbehälter (3) zu entfernen und, sich weiter in Richtung des Bienenstocks erstreckt, sowie einen Auslassdurchgang (8), der sich vom Bienenstock zur Auslassaussparung (80) erstreckt und an den Durchgängen (50) vorbei verläuft,
und wobei das Gehäuse (1) mindestens einen Bereich umfasst, insbesondere eine optional abnehmbare Abdeckung (13), die aus einem wasserabweisenden Material besteht, die über der Abdeckplatte (6) angeordnet ist, sodass sich die Abdeckplatte (6) innerhalb des Gehäuses (1) unter der Abdeckung (13) und in einem ausreichenden Abstand von der Abdeckung (13) befindet, sodass zwischen der Abdeckung (13) und der Abdeckplatte (6) ein Spalt ausgebildet wird, der den Auslassdurchgang (8) mit der Auslassaussparung (80) definiert, damit sich die Bienen und Drohnen dort hindurch bewegen können,
und wobei der Einlassdurchgang (7) und der Auslassdurchgang (8) einerseits mittels einer im Wesentlichen vertikal perforierten Wand (5), die mit den Durchgängen (50) zum Entfernen des Pollens von den Bienen versehen ist und über dem Pollensammelbehälter (3) angeordnet ist, und andererseits mittels der Abdeckplatte (6), die sich im Wesentlichen in eine horizontale Richtung innerhalb des Gehäuses (1) über dem Einlassdurchgang (7) nah an der perforierten Wand (5) und in einem ausreichenden Abstand von der Abdeckung (13) des Gehäuses (1) erstreckt, voneinander getrennt sind,
wobei die perforierte wand (5) mittels eines geeigneten Stellglieds (501), das sich außerhalb des Gehäuses (1) befindet, um eine Achse (500) verschwenkbar ist, die sich in einer horizontalen Ebene quer erstreckt und außerdem in jeder gewünschten Position und jeder gewünschten Neigung in Bezug zur horizontalen Ebene fixiert werden kann, wobei die perforierte Wand (5) gleichförmig ausgestaltet ist und aus mehreren horizontalen Lagerelementen (51, 51', 51") besteht, die in gleichem Anstand voneinander beabstandet sind und wobei jedes mit mehreren auskragenden Vorsprüngen (52, 52', 52") versehen ist, die in eine Richtung entlang jedes zugehörigen Lagerelements (51, 51', 51") gleichmäßig voneinander beabstandet sind und alle in dieselbe Richtung ausgerichtet sind, wobei jeder der auskragenden Vorsprünge (52, 52', 52") in Bezug zu jedem zugehörigen Lagerelement (51, 51', 51") senkrecht angeordnet ist und sich in Richtung jedes angrenzenden Lagerelements (51, 51', 51") erstreckt, jedoch in einem geeigneten Abstand zum angrenzenden Lagerelement (51, 51', 51") endet und am Endabschnitt leicht abgerundet ist, wodurch es den Beinen ermöglicht wird, sich durch derartig aufgebaute Durchgänge (50) zwischen je zwei angrenzenden Vorsprüngen (52, 52', 52") auf jedem bestimmten Lagerelement (51, 51', 51") sowie zwischen jedem bestimmten Lagerelement (51, 51', 51") und jedem angrenzenden Lagerelement (51, 51', 51") zu bewegen, wenn sie in die Pollenfalle eintreten und bevor sie in den Bienenstock eintreten,
und dadurch, dass ein Gitter (4) unter der perforierten Wand (5) mit den Durchgängen (50) und über dem Pollensammelbehälter (3) angeordnet ist, der dazu eingerichtet ist, es zuzulassen, dass sich der Pollen dort hindurch bewegt und sich in der Draufsicht über zumindest den Großteil der Silhouette des Behälters (3) erstreckt,
und dadurch, dass ein Flugbrett (11) innerhalb des Gehäuses (1) direkt unter und direkt vor dem Einlassdurchgang (7) montiert ist und dazu eingerichtet ist, es den Bienen zu ermöglichen, zu landen, bevor sie in die Pollenfalle eintreten, und um die quer verlaufende horizontale geometrische Achse (10) drehbar ist, wobei die Möglichkeit besteht, es in jeder passend geneigten Position in Bezug zur horizontalen Ebene mittels eines geeigneten Stellglieds (101), das sich außerhalb des Gehäuses (1) befindet, zu fixieren, wobei das Flugbrett (11) mit mindestens einem durchgehenden Durchgang (111) versehen ist, der an die Achse (10) und den Einlassdurchgang (7) angrenzt und es den Bienen ermöglicht, sich von der Unterseite des Flugbretts (11) zu dessen Oberseite dort hindurch zu bewegen,
und dadurch, dass der Auslassdurchgang (8) auf der Seite, die der Öffnung (20) des Adapters (2) zugewandt ist, mit einem weiteren zumindest teilweise verbreiterten Durchgang (9) versehen ist, wobei eine zusätzliche Wand (91) innerhalb des zusätzlichen verbreiterten Durchgangs (9) an den Pollensammelbehälter (3) angrenzend platziert ist und um die quer verlaufende horizontale geometrische Achse (910) verschwenkbar ist, wobei die Möglichkeit besteht, sie in jeder gewünschten Position in Bezug zur horizontalen Ebene mittels eines geeigneten Stellglieds (911), das sich außerhalb des Gehäuses (1) befindet, zu fixieren.

2. Pollenfalle nach Anspruch 1, **dadurch gekennzeichnet, dass** der untere Abschnitt (31) des Pollensammelbehälters (3) kompakt und luft- und feuchtigkeitsundurchlässig ist.

3. Pollenfalle nach Anspruch 1 oder 2, **dadurch gekennzeichnet, dass** der untere Abschnitt (31) des Pollensammelbehälters (3) aus Gitter mit einer ausreichenden Dichte ausgebildet ist, um eine Belüftung zuzulassen und zu verhindern, dass sich Pollen dort hindurch bewegt.

## Revendications

1. Piège à pollen d'abeilles conçu pour collecter du pollen dans une ruche à alvéoles, comprenant un logement (1) qui est doté, par le biais d'un adaptateur (2), d'une ouverture adaptée (20) pouvant être reliée à chaque ruche à alvéoles jetable, de sorte qu'à travers ladite ouverture (20) dans ledit adaptateur (2) et par conséquent également à travers ledit piège à pollen, les abeilles puissent entrer dans et sortir de ladite ruche à alvéoles, dans lequel une pluralité de passages (50) sont disposés à l'intérieur dudit logement (1) éloignés d'une distance appropriée d'un passage d'entrée (7), qui sont disposés pour faire passer les abeilles à travers, moyennant quoi le pollen est retiré des abeilles et collecté à l'intérieur d'un récipient (3) qui est situé sous lesdits passages (50), et qui est intégré à l'intérieur du logement (1) au moyen de guides (12) et peut par conséquent être déplacé dans la direction longitudinale du logement (1) du piège à pollen,
et dans lequel ledit logement (1) est doté d'une plaque de couverture (6) qui est située au-dessus desdits passages (50) et dudit récipient (3), et qui sert de protection au pollen ainsi collecté contre l'intrusion d'humidité et d'impuretés,
**caractérisé en ce que** ledit piège à pollen comprend deux passages mutuellement séparés (7, 8) à travers lesquels les abeilles peuvent se déplacer en direction de la ruche ou dans la direction opposée, à savoir un passage d'entrée (7) qui s'étend depuis l'ouverture d'entrée (70) du piège à pollen à travers lesdits passages (50) pour le retrait du pollen des abeilles dans la zone située au-dessus du récipient (3) de collecte de pollen et continue en direction de la ruche, ainsi qu'un passage de sortie (8) qui s'étend depuis la ruche en direction de l'évidement de sortie (80) et qui contourne lesdits passages (50),
et dans lequel ledit logement (1) comprend au moins une zone, en particulier un couvercle facultativement amovible (13) constitué d'un matériau résistant à l'eau, qui est disposé au-dessus de ladite plaque de couverture (6), de sorte que ladite plaque de couverture (6) soit située à l'intérieur du logement (1) sous ledit couvercle (13) et éloignée d'une distance suffisante dudit couvercle (13), de sorte qu'entre le couvercle (13) et ladite plaque de couverture (6), un espace soit formé dans le but de laisser passer les abeilles et des drones à travers, qui définit ledit passage de sortie (8) comportant ledit évidement de sortie (80),
et dans lequel ledit passage d'entrée (7) et ledit passage de sortie (8) sont séparés l'un de l'autre, d'une part au moyen d'une paroi perforée essentiellement verticale (5), qui est dotée desdits passages (50) de retrait du pollen des abeilles et qui est disposée au-dessus dudit récipient (3) de collecte de pollen, et d'autre part au moyen de ladite plaque de couverture (6), qui s'étend sensiblement dans une direction horizontale à l'intérieur dudit logement (1) au-dessus dudit passage d'entrée (7) proche de ladite paroi perforée (5) et éloignée d'une distance suffisante du couvercle (13) dudit logement (1),
ladite paroi perforée (5), au moyen d'un actionneur adapté (501) qui est situé à l'extérieur du logement (1) peut pivoter autour d'un axe (500) qui s'étend transversalement dans un plan horizontal et peut également être fixée dans chaque position souhaitée à chaque inclinaison souhaitée par rapport audit plan horizontal, dans lequel ladite paroi perforée (5) est conçue uniformément et est constituée d'une pluralité d'éléments de support horizontaux (51, 51', 51") qui sont espacés à équidistance les uns des autres et chacun d'eux est doté d'une pluralité de saillies en porte-à-faux (52, 52', 52") qui sont dans une direction le long de chaque élément de support correspondant (51, 51', 51") espacées à équidistance les unes des autres et qui sont toutes dirigées dans la même direction, dans lequel chacune desdites saillies en porte-à-faux (52, 52', 52") est disposée perpendiculairement par rapport à chaque élément de support (51, 51', 51") auquel elle appartient et s'étend en direction de chaque élément de support (51, 51', 51") voisin mais se termine à une distance appropriée de chaque dit élément de support (51, 51', 51") voisin et est légèrement arrondie au niveau de sa partie terminale, ce qui permet aux abeilles de passer à travers les passages (50) ainsi établis entre deux saillies (52, 52', 52") voisines sur chaque élément de support (51, 51', 51") particulier ainsi qu'entre chaque élément de support (51, 51', 51") particulier et chaque élément de support (51, 51', 51") voisin suite à l'entrée dans le piège à pollen et avant l'entrée dans la ruche,
et **en ce qu'**une grille (4) est placée sous ladite paroi perforée (5) comportant lesdits passages (50) et au-dessus dudit récipient (3) de collecte de pollen, laquelle est réglée pour permettre au pollen de passer à travers et s'étend au-dessus d'au moins la majorité du contour dudit récipient (3) vu de dessus,
et **en ce qu'**une planche de vol (11) est montée à l'intérieur du logement (1) juste sous et juste devant le passage d'entrée (7), et est réglée pour permettre aux abeilles d'atterrir avant d'entrer dans le piège à pollen et peut tourner autour de l'axe géométrique horizontal transversal (10) avec une possibilité de fixation dans chaque position inclinée appropriée par rapport au plan horizontal au moyen d'un actionneur adapté (101) qui est situé à l'extérieur du logement (1), dans lequel ladite planche de vol (11) est dotée d'au moins un passage traversant (111) qui est situé adjacent audit axe (10) et audit passage d'entrée (7) et permet aux abeilles de passer à travers depuis le côté inférieur de la planche de vol (11) vers son côté supérieur,
et **en ce que** le passage de sortie (8), sur le côté faisant face à l'ouverture (20) de l'adaptateur (2), est complété par un passage supplémentaire (9) au moins partiellement élargi, dans lequel une paroi supplémentaire (91) est placée à l'intérieur dudit passage supplémentaire (9) élargi adjacente au récipient (3) de collecte de pollen et peut pivoter autour de l'axe géométrique horizontal transversal (910) avec une possibilité de fixation dans chaque inclinaison souhaitée par rapport au plan horizontal au moyen d'un actionneur adapté (911) qui est situé à l'extérieur du logement (1).

2. Piège à pollen selon la revendication 1, **caractérisé en ce que** la partie inférieure (31) dudit récipient (3) de collecte de pollen est compacte et imperméable à l'air et à l'humidité.

3. Piège à pollen selon la revendication 1 ou 2, **caractérisé en ce que** la partie inférieure (31) dudit récipient (3) de collecte de pollen est formée en une grille présentant une densité suffisante pour permettre la ventilation et pour empêcher le pollen de passer à travers.
